Europäisches Patentamt

European Patent Office

Office européen des brevets

(11) Numéro de publication: **0 270 167**
**A1**

## (12) DEMANDE DE BREVET EUROPEEN

(21) Numéro de dépôt: **87202249.6**

(22) Date de dépôt: **18.11.87**

(51) Int. Cl.⁴: **G02F 1/03**

(30) Priorité: **21.11.86 FR 8616233**

(43) Date de publication de la demande:
**08.06.88 Bulletin 88/23**

(84) Etats contractants désignés:
**DE FR GB IT**

(71) Demandeur: **Laboratoires d'Electronique et de Physique Appliquée L.E.P.**
**3, Avenue Descartes**
**F-94450 Limeil-Brévannes(FR)**

㉜ FR

(71) Demandeur: **N.V. Philips' Gloeilampenfabrieken**
**Groenewoudseweg 1**
**NL-5621 BA Eindhoven(NL)**

㉜ **DE GB IT**

(72) Inventeur: **Polaert, Rémy Société Civile S.P.I.D.**
**209, rue de l'Université**
**F-75007 Paris(FR)**

(74) Mandataire: **Landousy, Christian et al Société Civile S.P.I.D. 209, Rue de l'Université**
**F-75007 Paris(FR)**

(54) **Relais optique dont la cible est refroidie par un échangeur thermique à gradient de température contrôlé.**

(57) Relais optique comportant une cible (12, 31) d'un matériau électriquement isolant et laissant passer la lumière d'une manière dépendant du champ électrique parallèle à la direction de propagation de cette lumière, des moyens (20, 22, 24) de balayage d'une première face de cette cible par un faisceau électronique, une anode (30) qui recueille les électrons secondaires émis, une lame (38) optiquement transparente et électriquement conductrice, disposée contre la deuxième face de la cible, qui reçoit le signal électrique d'information visuelle, la cible étant constituée en un matériau devenant ferroélectrique, et un échangeur thermique (18) relié à une source thermique qui maintient la température de la cible de sorte qu'en fonctionnement normal la cible est formée d'une zone centrale utile où elle présente une phase ferroélectrique monodomaine et d'une zone périphérique neutre, à température plus élevée que la température de Curie, où elle présente une phase paraélectrique.

Il est remarquable en ce que la cible est collée sur une plaque (32) qui est munie sur sa tranche d'un collier (33) très bon conducteur de la chaleur maintenu à une température T1 à l'aide d'au moins un pont thermique (37) relié au collier et à une source de référence (39) maintenue à une température T0, ladite plaque étant fixée à un support de plaque (34) maintenu à une température T2, ladite plaque qui déborde le support de plaque présente une zone d'un genre annulaire dans laquelle existe, un gradient de température T1-T2.

FIG.3

## "RELAIS OPTIQUE DONT LA CIBLE EST REFROIDIE PAR UN ECHANGEUR THERMIQUE A GRADIENT DE TEMPERATURE CONTROLE "

L'invention concerne un relais optique comportant une cible d'un matériau électriquement isolant et laissant passer la lumière d'une manière dépendant du champ électrique parallèle à la direction de propagation de cette lumière, des moyens pour faire balayer une première face de cette cible par un faisceau électronique, une anode apte à recueillir les électrons secondaires émis sous l'action de ce faisceau, une lame optiquement transparente et électriquement conductrice disposée contre la deuxième face de la cible, cette lame recevant le signal électrique d'information visuelle et formant ainsi l'électrode de commande, la cible étant constituée en un matériau devenant ferro-électrique au-dessous d'une certaine température, dite température de Curie, et un échangeur thermique relié à une source thermique qui maintient la cible à la température nécessaire au fonctionnement et qui agit sur la cible collée sur une plaque en un matériau bon conducteur thermique, de sorte qu'en fonctionnement normal la cible est formée :

-d'une zone centrale utile où elle présente une phase ferro-électrique monodomaine,

-et une zone périphérique neutre, à température plus élevée que la température de Curie, où elle présente une phase paraélectrique.

Un relais optique de ce type, pour projecteur de télévision, a été décrit dans les brevets FR 1 473 212 et FR 1 479 284. Afin de mieux caractériser l'invention un rappel du principe de fonctionnement de ce relais optique est donné ci-après. De plus amples renseignements peuvent être obtenus dans les documents cités.

Le cadre de l'invention concerne la transformation d'un signal électrique à variation temporelle, représentant une information visuelle, en une image visible. On sait que c'est là l'un des rôles d'un poste récepteur de télévision.

Dans le tube "image" d'un tel récepteur, c'est le faisceau d'électrons qui remplit classiquement les trois fonctions fondamentales de cette transformation :

f1 - il fournit l'énergie qui doit apparaître sous forme lumineuse : la puissance lumineuse du tube est donc toujours inférieure à la puissance transportée par le faisceau;

f2 - il réalise le balayage spatial de la surface de l'image;

f3 - il applique l'information visuelle.

En raison des fonctions f2 et f3 entre autres, la puissance du faisceau, et donc la brillance de l'image ne peuvent être augmentées autant qu'il le faudrait pour la projection sur un grand écran, par exemple.

C'est pourquoi il a été proposé de dissocier la fonction f1 confiée, par exemple, à une lampe à arc, des fonctions f2 et f3 confiées à ce que l'on appelle un "relais optique". Il utilise un cristal présentant un effet électro-optique appelé "Effet Pockels". Un cristal de phosphate diacide de potassium $KH_2 PO_4$ appelé par la suite DKDP, convient à cet usage.

Cet effet peut être partiellement et sommairement décrit comme suit : lorsque le cristal, qui est un isolant électrique, est soumis à un champ électrique parallèle à son axe cristallographique c (les trois axes cristallographiques a, b et c formant un trièdre trirectangle, l'axe c étant, le cas échéant, l'axe optique), l'indice n de ce cristal pour des rayons lumineux se propageant dans la direction c et polarisés linéairement dans le plan ab, dépend de la direction de cette polarisation. Plus précisément, si l'on désigne par X et Y les bissectrices des axes a et b, et si l'on repère les paramètres du cristal relatifs à ces diverses directions par les lettres qui désignent ces dernières, on peut décrire que le diagramme des indices dans le plan ab devient une ellipse d'axes X et Y au lieu d'un cercle, et que la différence $n_x-n_y$ est proportionnelle au champ électrique appliqué. Il s'ensuit que si les rayons lumineux incidents sont polarisés parallèlement à l'axe a, par exemple, l'intensité lumineuse I traversant un polariseur de sortie sera $I = I_0 \sin^2 kV$ si la direction de polarisation de ce polariseur est parallèle à l'axe b, et $I = I_0 \cos^2 kV$ si cette direction est parallèle à l'axe a, $I_0$ étant égale à l'intensité lumineuse incidente s'il n'y a pas d'absorption parasite, V étant la différence de potentiel électrique entre les deux faces du cristal, et k un coefficient dépendant du matériau cristallin utilisé.

Pour obtenir une image, par projection à partir d'une lampe à travers cet ensemble, il suffit, selon ce qui a été dit précédemment, de faire régner un champ électrique parallèle à l'axe c, et de faire correspondre, en chaque point de la cible, la valeur de ce champ à la brillance du point correspondant de l'image à obtenir. Dans ce but, un faisceau électronique, issu d'un canon à électrons, et traversant des organes de déviation classiques, balaye la cible remplissant ainsi la fonction f2. Quant à la fonction f3, c'est-à-dire ici la commande du champ électrique, elle est également remplie par le faisceau de la manière suivante.

Lorsque les électrons de faisceau atteignent la surface de la cible, ils provoquent, si leur énergie est comprise dans les limites convenables et dans la mesure où le potentiel d'anode est suffisamment élevé, l'émission d'électrons secondaires en nombre plus grand que celui des électrons incidents. Il en résulte une élévation du potentiel électrique du point atteint, de sorte que la différence de potentiel entre l'anode et ce point diminue. Si les électrons du faisceau atteignent ce point en nombre suffisant, cette différence de potentiel devient négative et atteint une valeur telle (-3V par exemple), que chaque électron incident ne provoque plus l'émission que d'un seul électron secondaire. Le potentiel de ce point est ainsi fixé à une valeur limite par rapport à celui de l'anode. Il suffit pour cela que, compte tenu de la vitesse de balayage, l'intensité du faisceau soit suffisante. Le potentiel de l'anode étant constant, chaque passage du faisceau d'électrons fixe, comme il vient d'être dit, le potentiel d'un point quelconque A de la surface atteinte à une valeur $V_0$ indépendante de ce point et de l'instant de passage. Mais la charge électrique correspondante apparue en ce point dépend du potentiel de l'électrode de commande située à proximité, de l'autre côté de la cible.

Si l'on appelle VA le potentiel de cette électrode à l'instant de ce passage, cette charge est proportionnelle à VO-VA, VA représentant la valeur du signal d'information visuelle à l'instant de son passage.

La cible, dont la biréfringence dépend du champ électrique, est constituée par un monocristal de KDP, dont environ 95% de l'hydrogène a la forme d'hydrogène lourd (deutérium).

Or, l'effet Pockels est proportionnel, pour une épaisseur de cristal donnée, aux charges qui apparaissent sur les faces du cristal et donc, pour une tension de commande donnée, à la constante diélectrique $\varepsilon$ de celui-ci. C'est pourquoi, on utilise une cible constituée en un cristal devenant ferroélectrique au-dessous d'une certaine température appelée température de Curie, et on opère avantageusement au voisinage de cette température, car la constante diélectrique atteint alors des valeurs très élevées et le relais optique peut fonctionner à l'aide de tensions de commande faciles à employer (l'effet Pockels étant proportionnel au produit $\varepsilon$ V).

Les cristaux les plus courants qui présentent ce phénomène sont des sels acides, notamment du type KDP qui appartient à la classe des cristaux quadratiques et présente un axe optique parallèle à l'axe cristallographique c. Sa température de Curie est située vers -53°C. Au-dessus de la température de Curie, le DKDP est un cristal quadratique classe de symétrie 42 m et il a un comportement paraélectrique. En dessous de la température de Curie, le DKDP devient orthorhombique, classe de symétrie mm2, et il manifeste un comportement ferroélectrique : localement il y a polarisation spontanée et apparition de domaines ferroélectriques.

A la température ambiante, le cristal est anisotrope, mais au voisinage du point de Curie l'anisotropie devient extrêmement importante. Le changement d'état s'accompagne de variations abruptes des propriétés physiques selon les axes du cristal :
- coefficients piézo-électriques
- coefficients électro-optiques
- constantes diélectriques $\varepsilon_x$ et $\varepsilon_z$.

Ainsi la constante diélectrique $\varepsilon_z$ passe d'une valeur d'environ 60 à la température ambiante à une valeur de 30.000 à la température de Curie.

On sait que, du point de vue électro-optique, l'épaisseur apparente e du cristal de DKDP est

$$e = l(\varepsilon_x / \varepsilon'_z)^{0.5}$$ où l est l'épaisseur réelle. La cible apparaît d'autant plus mince que le rapport $\varepsilon_x / \varepsilon'_z$ est plus petit, où $\varepsilon'_z$ est la valeur de $\varepsilon_z$ lorsque le cristal est bloqué mécaniquement. Dans un relais optique en effet, la lame monocristalline de DKDP, d'une épaisseur l voisine de 250 micromètres, est collée fermement sur un support rigide : une lame de fluorine de 5 mm d'épaisseur.

La cible du relais optique est donc habituellement refroidie vers -51°C, c'est-à-dire à une température légèrement supérieure au point de Curie. Dans ces conditions $\varepsilon_x / \varepsilon'_z = 1/9$ et l'épaisseur apparente du cristal est environ 80 micromètres, ce qui confère au relais optique une bonne résolution d'image. En dessous du point de Curie, ce rapport $\varepsilon_x / \varepsilon'_z$ est encore bien plus faible, ce qui améliore beaucoup la résolution d'image.

Jusqu'à ce jour, il n'avait pas été possible d'utiliser pour une projection d'images télévisées, une cible refroidie en dessous de sa température de Curie. En effet, le changement d'état faisait apparaître systématiquement des domaines ferroélectriques qui se manifestent sur l'écran de projection par l'apparition d'un grand nombre de lignes brillantes verticales et horizontales disposées de façon désordonnée en travers de l'image. Ces domaines correspondent à des zones de réarrangement atomique différent.

Dans la demande de brevet FR 2 587 809, la demanderesse a proposé de faire fonctionner le relais optique juste en dessous de la température de Curie de la cible, tout en obtenant une image finale ne présentant pas de détérioration dues à des lignes brillantes désordonnées.

Dans ce but pour maintenir la cible à la température nécessaire au fonctionnement, il a été proposé de munir le relais optique d'un échangeur thermique qui agit sur la cible de sorte qu'en fonctionnement normal la cible est formée :
- d'une zone centrale utile où elle présente une phase ferroélectrique monodomaine,
- et une zone périphérique neutre, à température plus élevée que la température de Curie, où elle présente une phase paraélectrique.

Lorsque l'on compare le rapport $\varepsilon_x/\varepsilon'_z$ dans la phase paraélectrique et dans la phase ferroélectrique, on constate en effet qu'il est possible d'améliorer la résolution intrinsèque de la cible en la faisant fonctionner dans l'état ferroélectrique.

Dans cette demande il a été mis en évidence l'intérêt de fonctionner à une température inférieure au point de Curie, le rapport $\varepsilon_x/\varepsilon'_z$ devenant bien plus faible, ce qui améliore nettement la résolution d'image du relais optique. Typiquement à la fréquence spatiale de 1000 points par ligne et au courant de faisceau nominal de 60 μA, le contraste qui est de 11% à la température habituelle de fonctionnement (-51°C), atteint 24% lorsque la température de la cible est inférieure au point de Curie et cela sur une plage d'une dizaine de degrés environ (de -63°C à -53°C).

Cette demande a proposé de substituer le refroidissement centripète de la cible par un refroidissement centrifuge.

En effet selon le mode habituel de construction, la cible de DKDP, de forme rectangulaire, est collée sur une lame de fluorine, qui est un bon conducteur thermique. Cette lame de fluorine est sertie dans une armature en cuivre qui sert à transférer des frigories, elle-même montée sur des éléments réfrigérants à effet Peltier. De cette manière, la cible se refroidit de façon centripète : les coins de la cible de DKDP atteignent la température de Curie en premier, puis les côtés ; un "cercle de froid" apparaît qui délimite la frontière entre les deux états, paraélectrique au centre et ferroélectrique à la périphérie. Pendant le même temps, dans la zone périphérique devenue ferroélectrique, apparaissent les lignes de démarcations brillantes déjà signalées entre les multiples domaines ferroélectriques. Celles-ci prennent naissance aux microscopiques mais inévitables défauts des bordures de la cible de DKDP.

Cette demande a proposé de faire progresser le froid à partir du centre de la cible et d'empêcher le cercle de froid d'atteindre les bords de la cible, afin que le cristal soit ferroélectrique au centre et paraélectrique à la périphérie. Le centre, qui est la zone utile pour la projection de l'image, est alors ferroélectrique et monodomaine. Cet état reste stable tant que la zone centrale ferroélectrique reste entourée d'une zone périphérique paraélectrique.

Mais les modes de réalisation pour obtenir le refroidissement de la cible par le centre, tout en sauvegardant les propriétés optiques du centre pour la projection de l'image, présentent une robustesse et une fiabilité insuffisantes. De plus le contrôle de l'écart de température entre la zone ferroélectrique et la zone paraélectrique est délicat à réaliser et défini en grande partie par l'usinage de la plaque. D'autre part, le mode de réalisation proposé se prête mal à l'obtention d'une zone utile à formats rectangulaires sans qu'il y ait une perte de surface de cible inexploitée.

Pour cela l'invention telle que définie dans le préambule est remarquable en ce que ladite plaque est munie sur sa tranche d'un collier très bon conducteur de la chaleur maintenu à une température T1 à l'aide d'au moins un pont thermique relié au collier et à une source de référence maintenue à une température T0, ladite plaque étant fixée à un support de plaque maintenu à une température T2 par la source thermique, ladite plaque débordant le support de plaque sur tout son pourtour afin qu'il existe dans ladite plaque une zone d'un genre annulaire dans laquelle existe, dans le plan de la plaque et pour toutes les directions, un flux thermique créant un gradient de température T1-T2, la partie centrale de ladite plaque, en étant pratiquement isotherme, créé ainsi dans la cible qui y est collée une partie isotherme active, le pourtour de la cible se trouvant en contact avec ladite plaque par la zone d'un genre annulaire, le collier et le support de plaque ayant un coefficient de dilatation thermique pratiquement identique à celui de ladite plaque.

L'invention sera mieux comprise à l'aide des figures suivantes, données à titre d'exemples non limitatifs, qui représentent :

figure 1 : une coupe de la partie essentielle du relais optique selon l'art antérieur,

figure 2 : les courbes de variations avec la température des constantes diélectriques $\varepsilon_x$, $\varepsilon_z$, $\varepsilon'_z$,

figure 3 : l'échangeur thermique du relais optique selon l'invention,

figures 4 et 5 : deux vues schématiques de dessus de la cible collée sur la plaque.

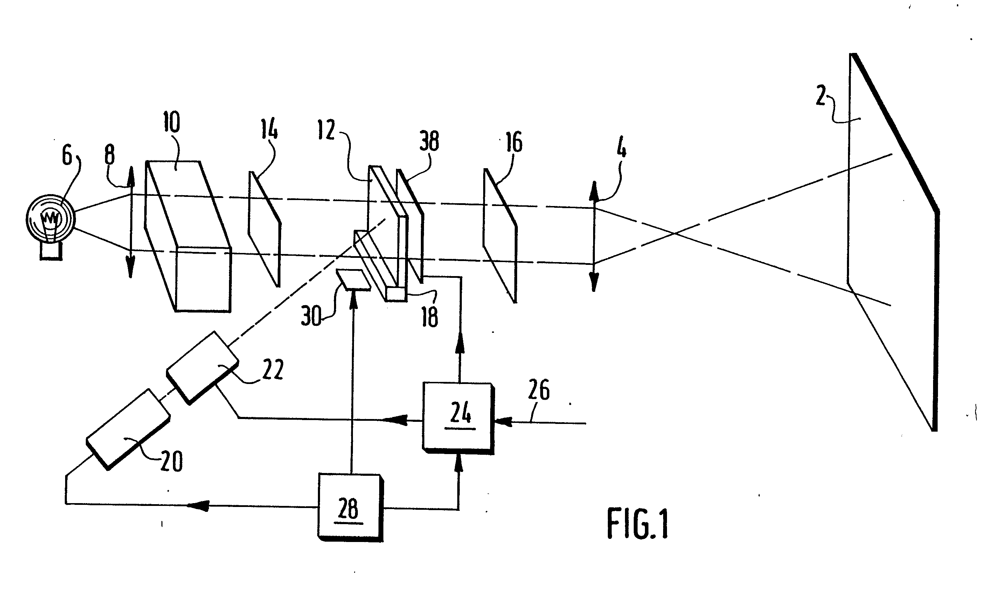

Sur la figure 1, sont schématiquement représentés, les organes essentiels d'un relais optique conforme à l'invention, et ceux qui coopèrent avec ce relais à l'obtention d'une image visible, projetée sur un écran 2 par une lentille de projection 4. La lumière est fournie par une lampe 6, représentée comme étant à incandescence, mais qui pourrait évidemment être de tout autre type. Cette lumière traverse une lentille de collimation 8, puis une cuve 10 dont le rôle est d'arrêter le rayonnement calorifique infrarouge. Le relais optique est essentiellement constitué par une cible 12, formée d'un monocristal parallélépipédique de DKDP dont l'axe optique (c) est perpendiculaire aux grandes faces, et placée entre les deux polariseurs croisés 14 et 16 dont les plans de polarisation sont parallèles aux deux autres axes cristallographiques (a et b) du monocristal. Un échangeur thermique 18 est en contact avec la cible 12 et la maintient au voisinage de sa température de Curie.

La face gauche de cette cible reçoit un faisceau d'électrons, représenté en pointillé et issu d'un canon à électrons 20. Ce faisceau balaye périodiquement toute la surface utile de la cible 12 sous l'action d'organes de déflexion 22 commandés par les signaux de balayage issus d'un récepteur 24 qui les élabore à partir des signaux de synchronisation qui lui sont fournis à son entrée 26 avec le signal d'information visuelle proprement dit. Un bloc 28 fournit à certains des organes déjà cités les tensions électriques continues qui leur sont nécessaires, ainsi qu'à une anode 30. Ce n'est que pour la clarté du dessin que celle-ci est représentée sous la forme d'une plaque parallèle au faisceau lumineux, car il est évident que cette disposition, très favorable au passage de la lumière ne l'est guère à la collection des électrons secondaires émis par tous les points de la surface de la cible 12 atteints par le faisceau électronique. C'est pourquoi, dans la pratique, l'anode est disposée parallèlement à la surface de la cible 12 et tout près de celle-ci. Comme elle doit être traversée par le faisceau d'électrons incidents et par la lumière, on lui donne une forme appropriée, celle d'une grille par exemple. Une lame 38 électriquement conductrice et optiquement transparente, à l'aide d'une mince couche d'or par exemple, est disposée derrière la cible 12. C'est à cette lame que le récepteur 24 applique le signal d'information visuelle.

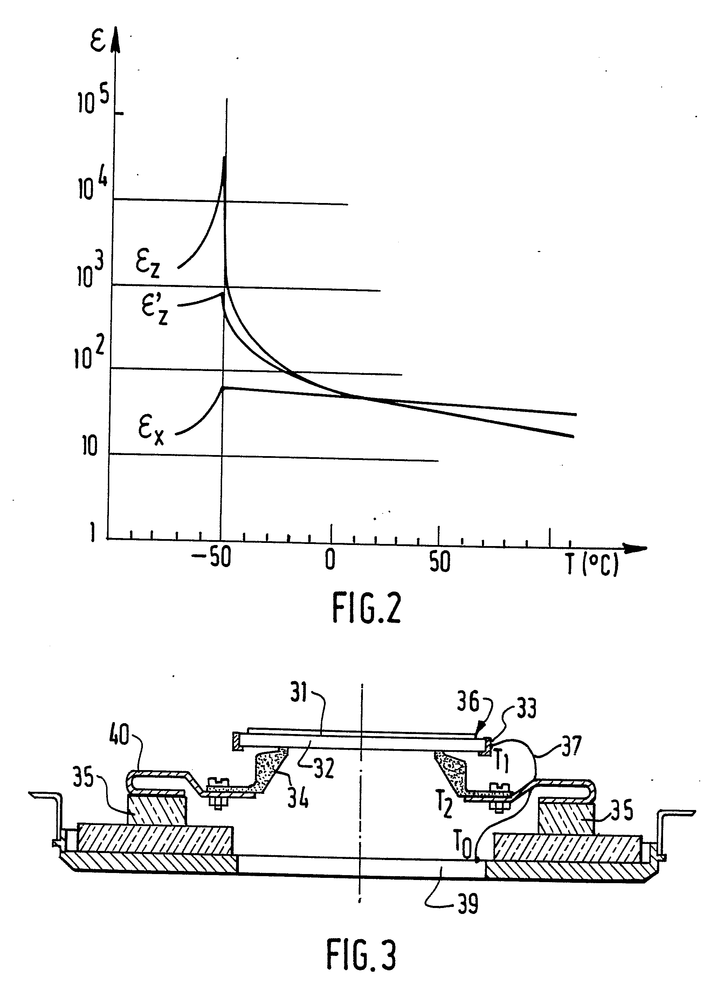

La figure 2 représente les variations avec la température de $\varepsilon_x$, $\varepsilon_z$, $\varepsilon'_z$. On constate que le passage de la phase ferroélectrique à la phase paraélectrique produit des variations brutales des caractéristiques de la cible et que l'échangeur thermique doit assurer une situation thermique très précise.

La figure 3 représente un échangeur thermique pour un relais optique selon l'invention. La cible de DKDP est collée sur une plaque 32 en fluorine d'épaisseur 2,5 mm. Le fluorine est un bon conducteur thermique : $360.10^{-4}$ cal/cm/sec/degré.

L'échangeur est conçu pour créer au centre de la cible une zone active pratiquement isotherme et pour délimiter une zone d'un genre annulaire, placée à la périphérie de la cible, dans laquelle existe dans le plan de la plaque et pour toutes les directions, un flux thermique créant un gradient de température. Ce gradient est tel qu'il maintient dans la zone active une température de cible de sorte que celle-ci soit dans un état ferroélectrique. De même il maintient dans la zone d'un genre annulaire une température de cible de sorte que celle-ci se trouve dans cette zone dans un état paraélectrique.

Ainsi la zone active conserve une structure ferroélectrique monodomaine et la zone d'un type annulaire empêche sa progression vers la périphérie afin que le monodomaine ne se morcelle pas en un grand nombre de domaines ferroélectriques plus petits si sa progression lui faisait atteindre la bordure de la cible.

Pour cela la cible 31 est collée sur une plaque en fluorine 32 à l'aide par exemple d'une colle adhésive optique polymérisable sous ultraviolets.

La plaque de fluorine 32 a une épaisseur de 2,5mm. Elle possède à sa périphérie un collier 33 en un matériau très bon conducteur thermique. La plaque 32 est également collée à un support de plaque 34 par la face opposée à celle qui reçoit la cible 31. La section du support de plaque 34, qui est en contact avec la plaque de fluorine, est continue afin de bien délimiter une surface pratiquement isotherme le long de cette surface de contact.

Entre cette surface de contact et le collier périphérique de la cible apparaît un gradient thermique dirigé du support de plaque vers le collier.

La section du support de plaque 34 peut être circulaire, rectangulaire ou carrée. Ces deux derniers formats permettant de délimiter une zone active centrale ferroélectrique de format approprié à la formation des images de type rectangulaire obtenues lors de l'utilisation du relais optique. Ainsi la majeure partie de la surface de la cible peut être exploitée.

Le bord 36 de la cible 31 doit se trouver à l'extérieur de la zone active ferroélectrique. Il doit en être suffisamment éloigné et se trouver dans la zone paraélectrique située dans le gradient thermique ou au-delà.

Mais en pratique il y a peu d'intérêt à faire dépasser la cible du collier 33. Ce collier a une forme adaptée au format de la plaque de fluorine à laquelle il est collé. Il peut par exemple être circulaire, rectangulaire, carré.

Afin de créer un flux thermique entre le support de plaque 34 et le collier 33 un élément réfrigérant 35 apporte des frigories sur le support de plaque 34 et au moins un pont thermique 37 évacue les frigories du collier vers une source de référence 39. Ces ponts thermiques 37 sont constitués de un ou plusieurs fils de cuivre ou de nickel-cuivre.

Pour des raisons mécaniques le support de plaque 34 est monté sur l'élément réfrigérant 35 à l'aide d'éléments souples 40.

Le support de plaque 34 et le collier 33 doivent avoir un coefficient de dilatation thermique très voisin de celui de la plaque de fluorine. L'utilisation du duralumin permet de satisfaire cette exigence.

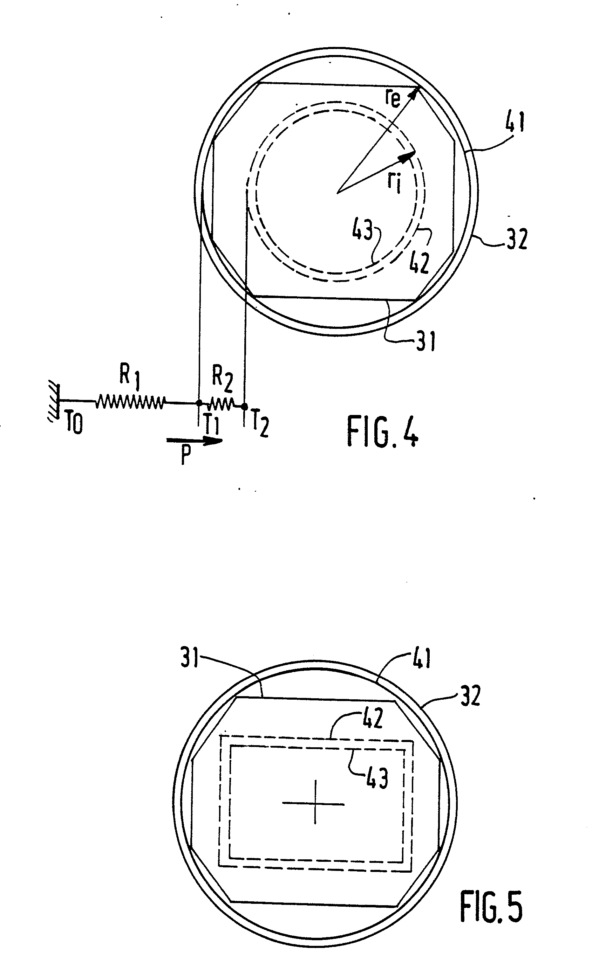

Le bilan thermique de l'échangeur thermique déterminé à l'aide des paramètres représentés sur la figure 4 est le suivant :
soit

T1 la température du collier

T2 la température du support de plaque

T0 la température de la source de référence

R1 la résistance thermique du pont thermique

R2 la résistance thermique de la zone de type annulaire

h2 épaisseur de la plaque de fluorine

$\lambda_2$ = 18 W.m$^{-1}$.°C$^{-1}$ la conductibilité thermique de la fluorine.

La puissance thermique transportée est :

$$P = \frac{T0-T1}{R1} = \frac{T1-T2}{R2}.$$

-La puissance rayonnée par la zone de type annulaire est pratiquement Pr = e.σ.S ($T_3^4$ - $T_4^4$),

avec $T_3$ = $T_2$ + 273°K, $T_4$ = $T_0$ + 273°K

où e est l'émissivité apparente de la cible

σ est la constante de Stefan-Boltzmann,

$\sigma = 5,67.10^{-8}$ W.m$^{-2}$.°K$^{-4}$

S est la surface de la zone annulaire.

Dans la réalité Pr est très inférieure à P et peut être négligée.

La résistance thermique pour une zone annulaire est :

$$R2 = \frac{Ln(re/ri)}{2\pi.\lambda 2.h2}$$

où Ln est le logarithme népérien,

et re et ri les diamètres extérieur et intérieur de la zone annulaire.

Avec les valeurs numériques suivantes :

T1 = -51°C ; T2 = -55°C ; T0 = +20°C

ri = 1,5.10$^{-2}$m ; re = 2,5.10$^{-2}$m ; h2 = 2,5.10$^{-3}$m

il faut, pour maintenir un écart de température de 4°C, véhiculer une puissance de 2,2 watts.

Le pont thermique doit alors avoir une résistance thermique telle que

R1 = (T0-T1)/P = 32,3 W.°C$^{-1}$.

Comme la résistance thermique d'un fil est donnée par R = 4 l1/$\pi$ .d1$^2$. $\lambda$1

avec

l1 : longueur du fil

d1 : diamètre du fil

$\lambda$ 1 : conductibilité thermique

en plaçant n fils à la périphérie du collier la résistance du pont thermique est R1 = R/n.

Avec par exemple 4 fils de cuivre avec

l1 = 4.10$^{-2}$m

$\lambda$ 1 = 390 W.m$^{-1}$.°C$^{-1}$

le diamètre du fil est d1 = 0,87 mm.

Sur la figure 4 on a représenté la plaque de fluorine 32, la limite extérieure 41 et la limite intérieure 42 de la zone de type annulaire à gradient thermique.

La zone utile active est représentée sous le rère 43. Le contour discontinu représente une possibilité de découpe de la cible de DKDP.

La figure 5 représente un autre mode de réalisation dans lequel la plaque de fluorine 32 a une forme circulaire alors que le support de plaque présente une section rectangulaire à l'endroit où il entre en contact avec la plaque de fluorine. La zone d'un type annulaire où se situe le gradient thermique présente là encore une limite extérieure 41 et une limite intérieure 42. La zone active utile pratiquement isotherme est délimitée par le contour 43. La cible 31 peut avoir la découpe représentée par le contour discontinu.

L'invention qui vient d'être décrite permet de réaliser un échangeur thermique ayant des qualités de robustesse, fiabilité et reproductibilité. L'écart de température T2-T1 peut être contrôlé aisément et finement par la valeur du pont thermique et la puissance des éléments réfrigérants. Les températures T1 et T2 sont très uniformes. Il est également très aisé de définir le format de la zone active en agissant sur la forme du support de plaque. Ce format peut également être modifié en intervenant sur le gradient de température qui peut être finement contrôlé.

**Revendications**

1. Relais optique comportant une cible (12, 31) d'un matériau électriquement isolant et laissant passer la lumière d'une manière dépendant du champ électrique parallèle à la direction de propagation de cette lumière, des moyens (20, 22, 24) pour faire balayer une première face de cette cible par un faisceau électronique, une anode (30) apte à recueillir les électrons secondaires émis sous l'action de ce faisceau, une lame (38) optiquement transparente et électriquement conductrice disposée contre la deuxième face de la cible, cette lame recevant le signal électrique d'information visuelle et formant ainsi l'électrode de commande, la cible étant constituée en un matériau devenant ferro-électrique au-dessous d'une certaine température, dite température de Curie, et un échangeur thermique (18) relié à une source thermique qui maintient la cible à la température nécessaire au fonctionnement et qui agit sur la cible collée sur une plaque (32) en un matériau bon conducteur thermique, de sorte qu'en fonctionnement normal la cible est formée :

-d'une zone centrale utile où elle présente une phase ferroélectrique monodomaine,

-et d'une zone périphérique neutre, à température plus élevée que la température de Curie, où elle présente une phase paraélectrique,

caractérisé en ce que ladite plaque (32) est munie sur sa tranche d'un collier (33) très bon conducteur de la chaleur maintenu à une température T1 à l'aide d'au moins un pont thermique (37) relié au collier et à une source de référence (39) maintenue à une température T0, ladite plaque étant fixée à un support de plaque (34) maintenu à une température T2 par la source thermique, ladite plaque débordant le support de plaque sur tout son pourtour afin qu'il existe dans ladite plaque une zone d'un genre annulaire dans laquelle existe, dans le plan de la plaque et pour toutes les directions, un flux thermique créant un gradient de température T1-T2, la partie centrale de ladite plaque, en étant pratiquement isotherme, créé ainsi dans la cible qui y est collée une partie isotherme active, le pourtour de la cible se trouvant en contact avec ladite plaque par la zone d'un genre annulaire, le collier (33) et le support de plaque (34) ayant un coefficient de dilatation thermique pratiquement identique à celui de ladite plaque.

2. Relais optique selon la revendication 1, caractérisé en ce que la plaque (32) est en fluorine et le collier (33) et le support de plaque (34) sont en duralumin.

3. Relais optique selon une des revendications 1 ou 2, caractérisé en ce que le pont thermique (37) est constitué d'au moins un fil de cuivre ou de nickel-cuivre.

4. Relais optique selon une des revendications 1 à 3, caractérisé en ce que le support de plaque (34) est en contact avec la plaque selon une zone à format rectangulaire, établissant dans la cible une partie isotherme active de format rectangulaire.

5. Relais optique selon une des revendications 1 à 3, caractérisé en ce que le support de plaque (34) est en contact avec la plaque selon une zone à format carrée, établissant dans la cible une partie isotherme active de format carré.

FIG.1

FIG.2

FIG.3

FIG.4

FIG.5

Office européen des brevets

# RAPPORT DE RECHERCHE EUROPEENNE

Numero de la demande

EP 87 20 2249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | SOVIET JOURNAL OF QUANTUM ELECTRONICS, vol. 11, no. 10, october 1981, pages 1348-1350, American Institute of Physics, New York, US; A.I. NAGAEV et al.: "Electron-beam space-time modulator of light with equilibrium-type recording" * Figure 1, page 1348, colonne de gauche, dernier alinéa - colonne de droite, premier alinéa * --- | 1 | G 02 F 1/03 |
| A | FR-A-1 479 284 (L.E.P.) * Figure 2; page 4, colonne de gauche, lignes 5-14; page 6, colonne de gauche, dernier alinéa - colonne de droite, ligne 11 * ----- | 1 | |

DOMAINES TECHNIQUES RECHERCHES (Int. Cl.4)

G 02 F

Le présent rapport a été établi pour toutes les revendications

| Lieu de la recherche | Date d'achèvement de la recherche | Examinateur |
|---|---|---|
| LA HAYE | 09-02-1988 | CONRAD V.HEYDENDORFF K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)